Europäisches Patentamt

European Patent Office

Office européen des brevets

(19)

(11) EP 1 217 761 A2

(12) EUROPEAN PATENT APPLICATION

(43) Date of publication:
26.06.2002 Bulletin 2002/26

(51) Int Cl.⁷: H04B 7/06, H04B 1/707

(21) Application number: 01128764.6

(22) Date of filing: 03.12.2001

(84) Designated Contracting States:
AT BE CH CY DE DK ES FI FR GB GR IE IT LI LU
MC NL PT SE TR
Designated Extension States:
AL LT LV MK RO SI

(30) Priority: 22.12.2000 JP 2000391125

(71) Applicant: Denso Corporation
Kariya-city, Aichi-pref., 448-8661 (JP)

(72) Inventors:
• Morita, Hideyuki
  Nishio-hsi, Aichi-ken 445 (JP)

• Hattori, Toshihiro
  Nishio-hsi, Aichi-ken 445 (JP)
• Tsukamoto, Akira
  Kariya-city, Aichi-pref.,448-8661 (JP)

(74) Representative:
Winter, Brandl, Fürniss, Hübner, Röss, Kaiser,
Polte Partnerschaft
Patent- und Rechtsanwaltskanzlei
Alois-Steinecker-Strasse 22
85354 Freising (DE)

(54) CDMA communication terminal for communication with adaptive array antenna device

(57) A CDMA communication system comprises a base station (10) and a mobile station (20). In the mobile station (20), a pilot demodulator (28) demodulates first and second pilot signals by reception path using antenna pilot demodulators (280, 281,..., 28n). An antenna phase difference calculator (29) determines phase difference Angle(n) for the first and second pilot signals on each reception path. By vector-adding phase difference Angle(1), Angle(2), ... , Angle(n), average Angle_a is determined as the average phase difference Angle(1), Angle(2), ... , Angle(n). This average Angle_a is used as the phase difference data for a feedback control in the base station (10).

FIG. 1

EP 1 217 761 A2

**Description**

**Description**

The present invention relates to a CDMA communication terminal, and relates more particularly to a CDMA communication terminal for communicating with an adaptive array antenna communication device.

It is proposed to use adaptive array antenna communication devices in CDMA communication system base stations in the 3GPP W-CDMA system. In the base station, information (data) signal is multiplied by a first complex-valued weight factor to obtain a first weighted signal. This first weighted signal and a first pilot signal are then added to obtain a first sum signal. This first sum signal is then orthogonally modulated and transmitted from a first antenna element. The data signal is also multiplied by a second complex-valued weight factor to obtain a second weighted signal. This second weighted signal and a second pilot signal are added to obtain a second sum signal. This second sum signal is orthogonally modulated and transmitted from a second antenna element.

Both of these transmission signals are received by the communication terminal in different phases because those signals are transmitted through different signal reception paths, that is, directly or after being reflected by buildings, etc. Therefore, accurate communication cannot be ensured.

It is an object of the present invention to improve a CDMA communication terminal which is used with adaptive array antenna communication device.

It is a further object of the present invention to determine a phase difference data in order to update signal weights with good precision in CDMA communications terminal used for communication with an adaptive array antenna communication device.

According to the present invention, a CDMA communication terminal receives through plural reception paths of transmission signals transmitted from first and second antenna elements of a base station. The CDMA communication terminal then calculates phase difference data indicating a phase difference between first and second known signals according to the plural reception paths. The CDMA communication terminal feedbacks the calculated phase difference data for updating first and second weights used in a base station for modulating the transmission signals.

Preferably, the phase difference of the first and second known signals are calculated for each reception path, and all calculated phase differences are combined to determine the phase difference data. In addition, the received power of the first known signal and the received power of the second known signal according to the plural reception paths are compared to obtain resulting power comparison data as update data.

The above and other objects, features and advantages of the present invention will become more apparent from the following detailed description made with reference to the accompanying drawings. In the drawings:

Fig. 1 is a block diagram showing a CDMA communication system having a base station and a mobile station in a preferred embodiment of the present invention;
Fig. is a schematic diagram showing a process for calculating a power difference and a phase difference in the mobile station shown in Fig. 1;
Fig. 3 is a flow diagram showing a process for calculating the phase difference in the mobile station shown in Fig. 1;
Fig. 4 is a flow diagram showing a process for calculating the power difference in the mobile station shown in Fig. 1;
Figs. 5A and 5B are schematic diagrams showing the format of first and second transmission signals;
Fig. 6 is a block diagram showing another CDMA communication system having a base station and a mobile station for comparison with that shown in Fig. 1; and
Figs. 7A and 7B are graphs showing vectors indicating a pilot signal phase difference between antennas in I/Q coordinates.

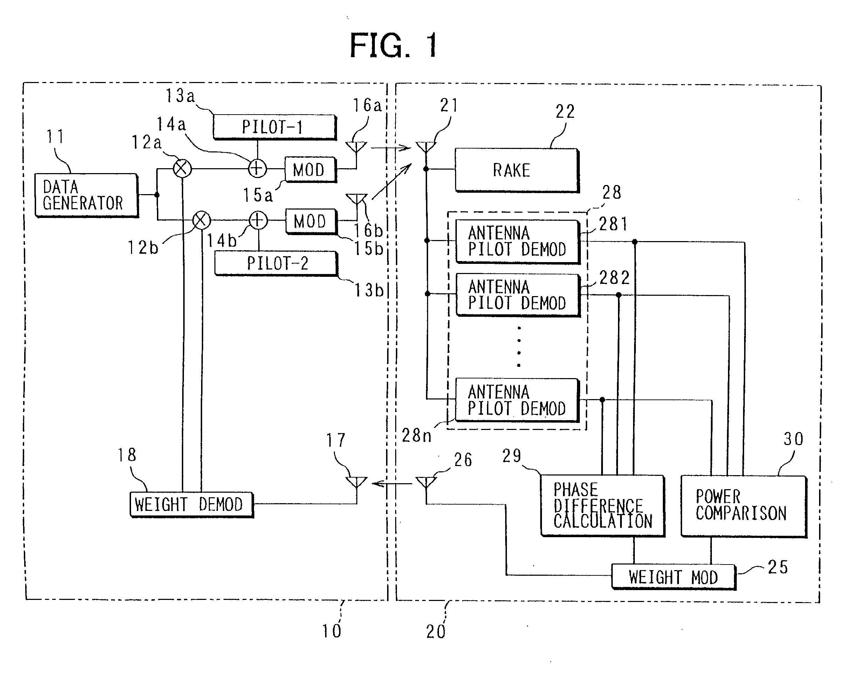

Referring to Fig. 1, a CDMA communication system comprises a base station 10 and a mobile station (communication terminal) 20. The base station 10 comprises a transmission data generator 11, multipliers 12a and 12b, a first pilot (first pilot) generator 13a, a second pilot (second pilot) generator 13b, adders 14a and 14b, orthogonal modulators 15a and 15b, antenna elements 16a and 16b, a receiving antenna 17, and a weight demodulator 18. The mobile station 20 comprises a receiving antenna 21, a RAKE synthesis demodulator 22, a weight modulator 25, a transmission antenna 26, a pilot demodulator 28, a phase difference calculator 29 and an antenna-receiving power difference comparator 30.

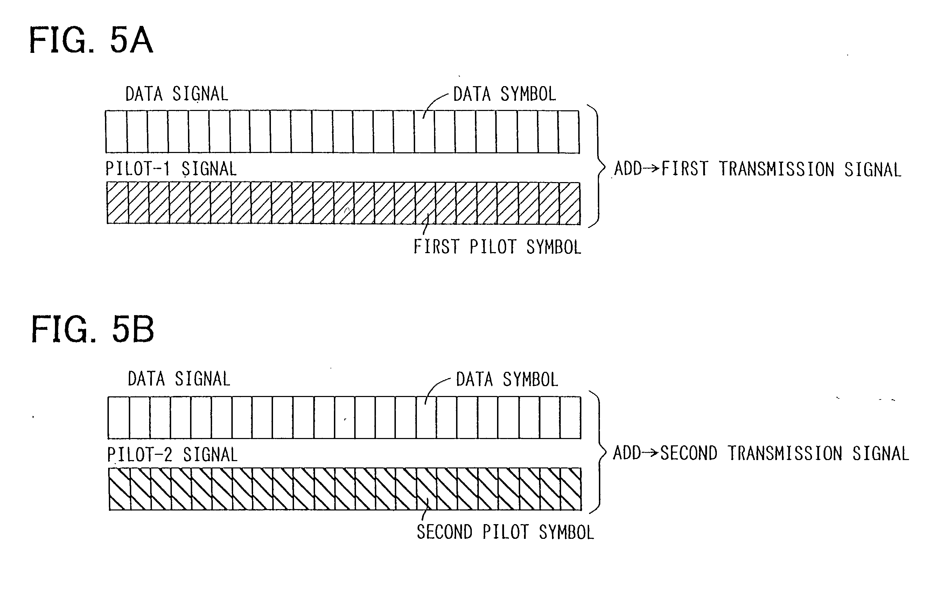

In the base station 10, the transmission data generator 11 of base station 10 outputs a first data (information) signal after spectrum-spreading (code-spreading) to multiplier 12a, and outputs a second data (information) signal after spectrum-spreading to multiplier 12b. Each data signal is a complex signal consisting of plural data symbols as shown in Figs. 5A and 5B. Multiplier 12a obtains a first weighted signal by calculating the complex value product of a first complex-valued weight and the data signal from the transmission data generator 11 after spectrum-spreading. Multiplier 12b obtains a second weighted signal by calculating the complex value product of the data signal from the transmission data generator 11 after spectrum-spreading and a second complex-valued weight.

First pilot generator 13a outputs a first pilot signal (first known signal) after spectrum-spreading to adder 14a. This first pilot signal is a complex signal, and as shown in Fig. 5A consists of multiple first pilot symbols. Second pilot generator 13b outputs a second pilot signal (second known signal) after spectrum-spreading to adder 14b. This second pilot signal is a complex signal, and as shown in Fig. 5B consists of multiple second pilot symbols.

It should be noted that the first and second pilot symbols are mutually different. The spreading code used for spectrum-spreading the first and second pilot symbols are the same, and the spreading codes used for spectrum-spreading the first and second pilot signals are different from those used for spectrum-spreading the data signal.

As shown in Fig. 1, adder 14a determines the complex sum of the first pilot signal after spectrum-spreading from first pilot generator 13a and first weighted signal from multiplier 12a, and outputs a first sum signal. Adder 14b determines the complex sum of the second pilot signal after spectrum-spreading from second pilot generator 13b and the second weighted signal from multiplier 12b, and outputs a second sum signal.

The orthogonal modulator 15a orthogonally modulates the first sum signal from adder 14a, and outputs the first transmission signal from antenna element 16a as an electromagnetic wave (RF signal). The first transmission signal is thus the sum of the data signal and first pilot signal. Orthogonal modulator 15b orthogonally modulates the second sum signal from adder 14b to output the second transmission signal from antenna element 16b as an electromagnetic wave (RF signal). The second transmission signal is thus the sum of the data signal and second pilot signal.

The weight demodulator 18 demodulates a feedback signal showing phase difference information and power comparison information further described below, updates the first and second complex-valued weights based on the feedback signal, outputs first complex-valued weight to multiplier 12a, and outputs second complex-valued weight to multiplier 12b.

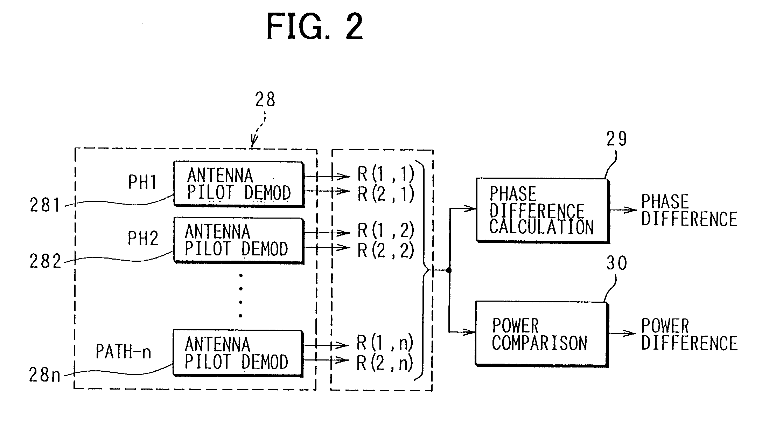

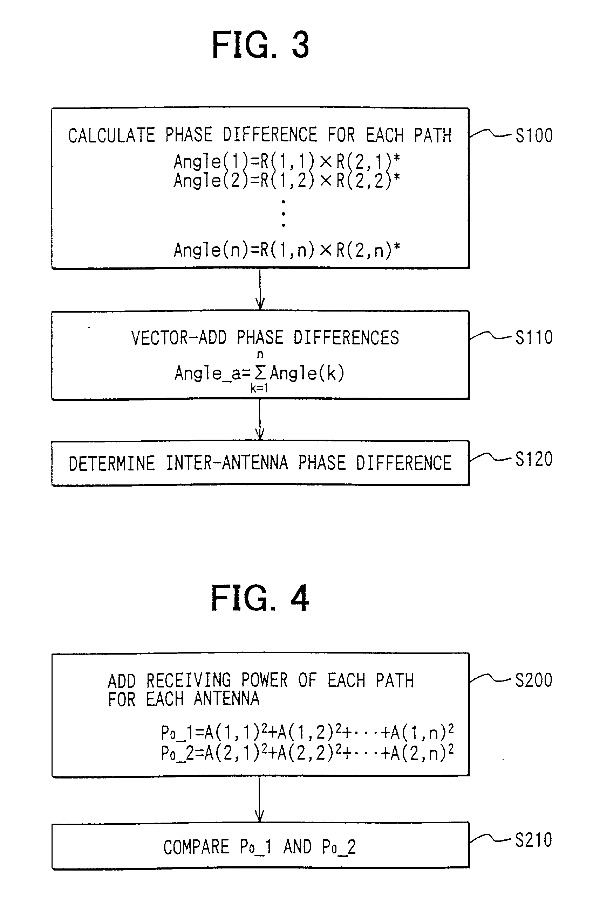

Fig. 2 shows the operation of pilot demodulator 28, antenna phase difference calculator 29, and antenna-receiving power comparator 30. Fig. 3 shows the operation of antenna phase difference calculator 29 in detail. Fig. 4 shows the operation of antenna-receiving power comparator 30 in detail.

In the mobile station 20, the receiving antenna 21 of the mobile station 20 receives the sum of the first and second transmission signals from base station 10 as the reception signals through various reception paths. The paths include a direct path without any reflection by a building and other paths with reflection by buildings, etc.

The RAKE synthesis demodulator 22 receives the reception signal from receiving antenna 21 through the plural reception paths, demodulates and RAKE synthesizes the plural reception paths to the individual reception paths to obtain the data signal. The demodulator RAKE synthesis demodulator demodulates according to the plural reception paths of the transmission signals transmitted from the base station 10 and aligns the signal arrival timing at each of the plural reception paths. The transmission signals are demodulated before being synthesized.

The pilot demodulator 28 has antenna pilot demodulators 280, 281, ..., 28n (where n is the number of reception paths). Antenna pilot demodulators 280, 281, ... , 28n demodulate first and second pilot signals for each reception path.

The first and second pilot signals R(K,L) demodulated to the respective reception paths are defined in equation (1).

$$R(K,L) = A(K,L) \exp(j\phi(K,L)) \tag{1}$$

where K (= 1, 2) is the pilot signal identification number, and is the identification number for antenna elements 16a and 16b of base station 10 because antenna elements 16a and 16b of base station 10 each transmit a different pilot signal. In addition, L (= 1, ... , n) is the reception path identification number; A(K,L) is the amplitude of the received pilot signal; and $\phi(K,L)$ is the phase rotation on the transmission path between the base station 10 and mobile station 20.

For example, antenna pilot demodulator 281 demodulates the first pilot signal R(1,1) and the second pilot signal R(2,1) based on reception path PH1. Antenna pilot demodulator 282 demodulates first pilot signal R(1,2) and second pilot signal R(2,2) based on reception path PH2. Antenna pilot demodulator 28n demodulates first pilot signal R(1,n) and second pilot signal R(2,n) based on reception path PHn.

Next, as shown in Fig. 3, antenna phase difference calculator 29 calculates the phase difference (phase difference Angle(n)) between the first and second pilot signals for each reception path PH1 to PHn. More specifically, as shown in Fig. 3, it calculates the phase difference Angle(1), Angle(2),..., Angle(n) for the first and second pilot signals for each reception path PH1, PH2, ..., PHn as defined in equation (2), equation (3), and equation (4) at step S100. Here, notation * indicates a complex conjugate.

$$\text{Angle}(1) = R(1,1) \times R(2,1)^* \tag{2}$$

$$Angle(2) = R(1,2) \times R(2,2)^* \tag{3}$$

$$Angle(n) = R(1,n) \times R(2,n)^* \tag{4}$$

Next, antenna phase difference calculator 29 determines sum Angle_a at step S110 as defined in equation (5) by vector-addition of phase difference Angle(1), Angle(2), ..., Angle(n). More specifically, by vector-adding phase differences Angle(1), Angle(2), ... , Angle(n), antenna phase difference calculator 29 determines average Angle_a as the average phase difference Angle (1), Angle (2), ..., Angle(n) using the magnitude of the reception signals on each reception path as the weight, and defines this average Angle_a as the phase difference information (phase difference between antenna elements) at step S120.

$$Angle\_a = Angle(1) + Angle(2) + ... + Angle(n) \tag{5}$$

It should be noted that for directivity control of a transmitting adaptive array antenna the first and second weighted signals of the first and second transmission signals from antenna elements 16a and 16b must be received at the same receiving power in a specific area. This is because in addition to the first and second weighted signals arriving in inverse phase at the area where a null point is formed in a specific area, the first and second weighted signals cancel each other as a result of the first and second weighted signals being received at the same receiving power.

Furthermore, as a result of the first and second weighted signals reaching mobile station 20 in a specific area at the same receiving power and in the same phase, the first and second weighted signals do not cancel each other at the mobile station 20, good signal synthesis of the first and second weighted signals is possible, and precise data signal demodulation is possible using this synthesis signal.

In addition to functioning so that the first and second weighted signals arrive at the mobile station 20 in the same phase, the first and second complex-valued weights must also function so that the first and second weighted signals arrive at the mobile station 20 with the same amplitude. In order for the first and second weighted signals to reach the mobile station 20 with the same amplitude, highly accurate amplitude difference information for the first and second pilot signals received by mobile station 20 and therefore highly accurate power comparison data for the first and second pilot signals, is required.

More specifically, in order for the first and second complex-valued weights to function well, high precision power comparison data is needed in addition to high precision phase difference data for the first and second pilot signals. In other words, values that are more appropriate as the first and second complex-valued weights can be obtained if high precision phase difference data and high precision power comparison data can be determined for the first and second pilot signals. The antenna-receiving power comparator 30 described below is therefore used.

As shown in Fig. 4, antenna-receiving power comparator 30 obtains the power sum at step S200 by adding the power of each reception path for each pilot signal (each antenna element). More specifically, as defined in equation (6), the sum of squares (power) of the amplitude of the first pilot signal is determined for each reception path, and sum Po_1 is determined by adding the sum of squares (power) for the plural reception paths in the first pilot signal.

$$Po\_1 = A(1,1)^2 + A(1,2)^2 + ... + A(1,n)^2 \tag{6}$$

As defined in equation (7), the sum of squares (power) of the amplitude of the second pilot signal is determined for each reception path, and sum Po_2 is determined at step S200 by adding the sum of squares (power) for the plural reception paths in the second pilot signal.

$$Po\_2 = A(2,1)^2 + A(2,2)^2 + ... + A(2,n)^2 \tag{7}$$

The antenna-receiving power comparator 30 then compares sum Po_1 and sum Po_2 at step S210 to obtain power comparison result (Po_1 - Po_2).

Next, weight modulator 25 modulates the feedback signal indicating the power comparison result from antenna-receiving power comparator 30 and the phase difference of antenna phase difference calculator 29, and transmits the feedback signal from transmission antenna 26 as an electromagnetic wave.

The receiving antenna 17 of base station 10 then receives and outputs the feedback signal to weight demodulator 18. The weight demodulator 18 demodulates the feedback signal to obtain the power comparison result and calculated phase difference, and updates the first and second complex-valued weights based on this power comparison result and calculated phase difference. A specific process whereby the weight demodulator 18 updates the first and second complex-valued weights is described below.

First, the m-th (where m is a natural number) first complex-valued weight W1(m) of antenna element 16a can be denoted as defined in equation (8), in which notation A1 is the amplitude and θ1(m) is the phase.

$$W1(m) = A1 \exp (j \cdot \theta 1(m)) \tag{8}$$

The m-th second complex-valued weight W2(m) of antenna element 16b can be denoted as defined in equation (9), in which notation A2 is the amplitude and θ2(m) is the phase.

$$W2(m) = A2 \exp (j \cdot \theta 2(m)) \tag{9}$$

Next, the weight demodulator 18 updates the first and second complex-valued weights as described below.

(1) If the first pilot signal is delayed by the phase θd to the second pilot signal, the (m+1)-th first complex-valued weight W1(m+1) is advanced by the phase θd to the (m+1)-th second complex-valued weight W2(m+1). As a result, first complex-valued weight W1(m+1) can be denoted as defined in equation (10), and second complex-valued weight W2(m+1) can be denoted as defined in equation (11).

$$W1(m+1) = A1 \exp (j \cdot \theta 1(m) + j\theta d) \tag{10}$$

$$W2(m+1) = A2 \exp (j \cdot \theta 2(m)) \tag{11}$$

(2) If the first pilot signal is advanced by the phase θd to the second pilot signal, the second complex-valued weight W2(m+1) is advanced by the phase θd to the first complex-valued weight W1(m+1). As a result, first complex-valued weight W1(m+1) can be denoted as defined in equation (12), and second complex-valued weight W2(m+1) can be denoted as defined in equation (13).

$$W1(m+1) = A1 \exp (j \cdot \theta 1(m)) \tag{12}$$

$$W2(m+1) = A2 \exp (j \cdot \theta 2(m) + j\theta d) \tag{13}$$

The first and second weighted signals will arrive in the same phase at the mobile station 20 by using the first and second complex-valued weights defined in equations (10) and (11) or (12) and (13).

(3) If the power of the first pilot signal is greater than the power of the second pilot signal (Po_1 > Po_2), the square of the amplitude of first complex-valued weight W1(m+1) is made a specific integer k smaller than the square A1² of the amplitude of first complex-valued weight W1(m). In addition, the square of the amplitude of second complex-valued weight W2(m+1) is made to be greater than the square A2² of the amplitude of second complex-valued weight W2(m) by a specific integer k. As a result, first complex-valued weight W1(m+1) can be denoted as defined in equation (14), and second complex-valued weight W2(m+1) can be denoted as defined in equation (15).

$$W1(m+1) = (A1^2 - k)^{1/2} \exp (j\theta 1(m)) \tag{14}$$

$$W2(m+1) = (A2^2 + k)^{1/2} \exp (j\theta 2(m)) \tag{15}$$

(4) If the power of the first pilot signal is less than the power of the second pilot signal (Po_1 ≤ Po_2), the square of the amplitude of first complex-valued weight W1(m+1) is made to be greater than the square $A1^2$ of the amplitude of first complex-valued weight W1(m) by a specific integer k. In addition, the square of the amplitude of second complex-valued weight W2(m+1) is made to be less than the square $A2^2$ of the amplitude of second complex-valued weight W2(m) by a specific integer k. As a result, first complex-valued weight W1(m+1) can be denoted as defined in equation (16), and second complex-valued weight W2(m+1) can be denoted as defined in equation (17).

$$W1(m+1) = (A1^2 + k)^{1/2} \exp (j\theta1(m)) \qquad (16)$$

$$W2(m+1) = (A2^2 - k)^{1/2} \exp (j\theta2(m)) \qquad (17)$$

The first and second weighted signals will arrive with the same amplitude at the mobile station 20 by using the first and second complex-valued weights shown in equations (14) and (15) or (16) and (17).

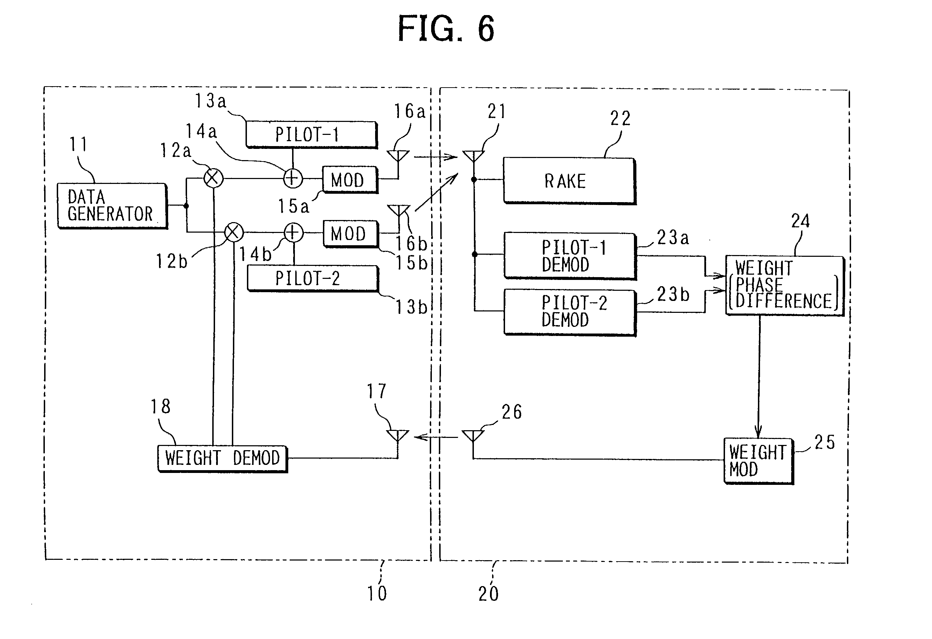

Here, the above preferred embodiment is compared with an exemplary CDMA communication system shown in Fig. 6. This system shown in Fig. 6 is different from the preferred embodiment in that the phase difference is calculated with respect to a single path a first pilot demodulator 23a, a second pilot demodulator 23b and a weight calculator 24 are used in the mobile station. The first pilot demodulator 23a receives the reception signal from receiving antenna 21, and demodulates the first pilot signal based only on one reception path of the reception signal. The second pilot demodulator 23b receives the reception signal from receiving antenna 21, and demodulates the second pilot signal based only on one reception path of the reception signal.

The weight calculator 24 compares the phases of the first and second pilot signals to obtain the phase difference data, and outputs a phase comparison signal indicating this phase difference information. This phase difference information indicates the condition of the communication path (phase rotation) between the base station and mobile station, and is used to update (determine) the first and second complex-valued weights described below. The weight modulator 25 modulates the phase comparison signal, and outputs the modulated signal as a feedback signal from transmission antenna 26.

The receiving antenna 17 of base station 10 then receives and outputs the feedback signal from the transmission antenna 26 of mobile station 20 to the weight demodulator 18. The weight demodulator 18 demodulates the feedback signal to obtain the phase difference data, and based on this phase difference data updates the first and second complex-valued weights. The first and second complex-valued weights are updated so that the first and second weighted signals arrive at the mobile station 20 in the same phase.

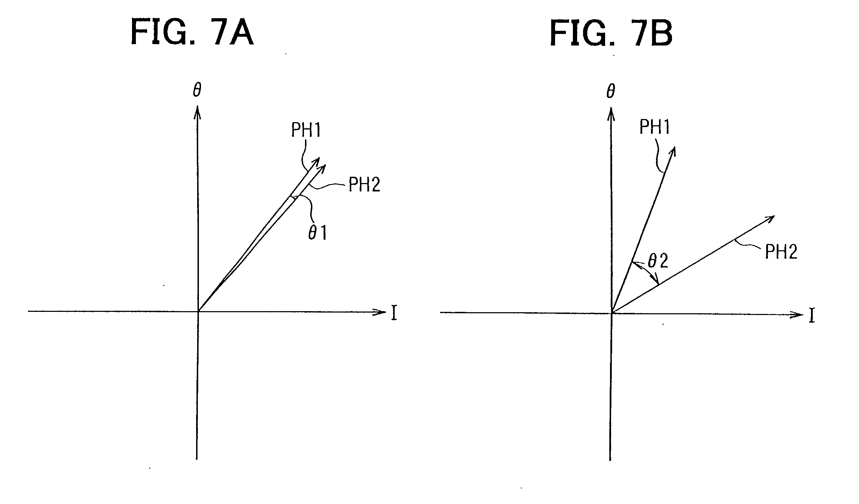

It should be noted that this phase difference information is determined based on only one reception path of the signal received through receiving antenna 21 of the mobile station 20. This is further described below with reference to Figs. 7A and 7B using an example in which reception paths PH1 and PH2 of the reception signal are received by the mobile station 20. Figs. 7A and 7B show the first reception path PH1 of the reception signal and the second reception path PH2 in I/Q coordinates (polar coordinates).

As shown in Fig. 7A, for example, if the phase difference data is obtained based on only one of the reception paths, PH1 or PH2, the error of the phase difference data is small when the phase difference θ1 between the vectors indicating the phase difference between the first reception path PH1 of the reception signal and the second reception path PH2 is small. As shown in Fig. 7B, however, when the phase difference vectors indicating the phase difference between the first reception path PH1 of the reception signal and the second reception path PH2 is large θ2 (>θ1) and the phase difference data is obtained based on only one of reception paths PH1 and PH2, error in the phase difference data will also be large.

In this exemplary system shown in Fig. 7, the vectors indicating the phase difference between reception paths PH1 and PH2 indicate the condition of the respective communication paths between the base station and mobile station. Thus, error in the first and second complex-valued weights becomes great when the phase difference error is great, and the first and second complex-valued weights are unable to function to good effect.

Contrary to the exemplary system shown in Fig. 7, the present embodiment provides the following advantages.

First, the phase difference data is very accurate because the antenna phase difference calculator 29 determines the phase difference information (the phase difference between the antenna elements) for each of plural reception paths. Furthermore, the first and second complex-valued weights can be updated to good effect because they are updated in the base station 10 according to this phase difference data.

In addition, a very accurate power comparison result is achieved because the antenna-receiving power comparator 30 compares the power of the first and second pilot signals for plural reception paths. The first and second complex-valued weights are also more appropriate because the first and second complex-valued weights are updated according to the phase difference data and this power comparison information.

It will be noted that first pilot generator 13a and second pilot generator 13b of base station 10 in this embodiment use mutually different first and second pilot symbols to generate mutually different first and second pilot signals, and use the same spread code for spectrum-spreading, but the invention shall not be so limited. For example, mutually identical first and second pilot symbols can be used while using different spread codes used for spectrum-spreading.

Furthermore, the present embodiment is described using an example in which the first and second transmission signals transmitted from base station 10 are spectrum spread using different spread codes for the data signal and first pilot signal (or second pilot signal), but the invention shall not be so limited. For example, the data signal and first pilot signal can be transmitted on a time division basis while spectrum-spreading the data signal and first pilot signal using the same spread code.

Yet further, the present embodiment is described using an example in which the amplitude and phase of the first and second complex-valued weights are changed to update the first and second complex-valued weights, but the invention shall not be so limited as it is possible to change only the phase of the first and second complex-valued weights. It is also possible for the base station 10 to multiply only one of the data signals output from transmission data generator 11 by the complex-valued weight instead of respectively multiplying the data signals output from transmission data generator 11 by the first and second complex-valued weights. In this case it is possible to use only one of the multipliers 12a and 12b in the base station 10 shown in Fig. 1.

The mobile station 20 used in an embodiment of the present invention can be a cellular phone, a mobile car telephone, or a PHS, PDA, or other communication terminal. To achieve the present invention the circuit design of the mobile station 20 shown in Fig. 1 can also be applied to the CDMA communication system base station. It should be noted that the base station 10 is described using two antenna elements (16a, 16b) by way of example, but the invention shall not be so limited and three or more antenna elements can be used.

The present invention may further be implemented in other ways without departing from the spirit of the invention.

## Claims

1. A CDMA communication terminal (20) for communicating with an adaptive array antenna communication system (10) having first and second antenna elements (16a, 16b), data generating means (11) for generating a data signal for each antenna element, multipliers (12a, 12b) for obtaining a first weighted signal by multiplying a first weight with the data signal for one antenna element and obtaining a second weighted signal by multiplying a second weight with the data signal for the other antenna element, adders (14a, 14b) for obtaining a first sum signal by adding the first weighted signal and a first known signal and obtaining a second sum signal by adding the second weighted signal and a second known signal, and transmission means (15a, 15b, 16a, 16b) for transmitting the first sum signal from the first antenna element and transmitting the second sum signal from the second antenna element, the the CDMA communication terminal (20) comprising:

   reception means (21) for receiving transmission signals transmitted from the first and second antenna elements through plural reception paths; and
   phase difference calculating means (29) for calculating phase difference data indicating a phase difference between the first and second known signals according to the plural reception paths as update data for updating the first and second weights.

2. The CDMA communication terminal (20) as in claim 1, wherein the phase difference calculating means (29) calculates the phase difference of the first and second known signals for each reception path, and combines the phase differences for each reception path to determine the phase difference data.

3. The CDMA communication terminal (20) as in claim 1 or 2, further comprising:

   power comparing means (30) for comparing a received power of the first known signal and a received power of the second known signal according to the plural reception paths of the reception means, and obtaining resulting power comparison data as the update data.

4. The CDMA communication terminal (20) as in claim 3, wherein the power comparing means (30) includes:

   power adding means (S200) for determining the received power of the first and second known signals for each reception path, determining a first power sum by adding the determined received power of the first known signals for each reception path, and determining a second power sum by adding the determined received power of the second known signals for each reception path; and
comparing means (S210) for comparing the first power sum and the second power sum, and obtaining the resulting comparison data as the power comparison data.

5. A mobile station (20) for receiving a code-spread RF signal from first and second antennas (16a, 16b) of a base station (10), and calculating and returning phase difference data for the RF signals transmitted from the first and second antennas to vary signal directivity to the base station in order to vary at least directivity of an antenna beam transmitted from the base station, the mobile station (20) comprising:

data demodulation means (22) for demodulating according to the plural reception paths of the RF signals transmitted from the base station;
RAKE synthesis means (22) disposed downstream of the data demodulating means for aligning the signal arrival timing at each of the plural reception paths;
phase difference demodulation means for demodulating the RF signals for the plural reception paths of the RF signals transmitted from the base station, the RF signals being demodulated from the RF signals before synthesis by the RAKE synthesis means;
phase difference calculation means (29) for calculating a phase difference for each reception path from the output of the phase difference demodulation means; and
means (25) for calculating phase difference data among the plural reception paths returned to the base station from the phase differences calculated by the phase difference calculation means.

6. A mobile station (20) for receiving a code-spread RF signal from first and second antennas (16a, 16b) of a base station (10), and calculating and returning phase difference data for the RF signals transmitted from the first and second antennas to vary signal directivity to the base station in order to vary the directivity of an antenna beam transmitted from the base station, the mobile station (20) comprising:

a plurality of reception means (22, 28) for demodulation according to demodulation timing for each of the plural reception paths of the RF signals transmitted from the base station;
phase difference calculation means (29) for calculating a phase difference for each of the plural path reception means output from the plural path reception means; and
means (25) for calculating phase difference data among the plural reception paths returned to the base station from the phase differences calculated by the phase difference calculation means.

7. A base station (10) for communication with a mobile station (20), the base station (10) comprising:

first and second antennas (16a, 16b) for transmitting a code-spread RF signal from each antenna; and
a receiving antenna (17) for receiving from the mobile station phase difference data for each RF signal transmitted from the first and second antennas in order to adjust directivity of the first and second antennas,

wherein the phase difference data is calculated from RF-signals transmitted through the plural reception paths that are transmission paths of the RF signals, and
wherein directivity of the antennas is controlled based on the phase difference data calculated from the plural reception paths.

# FIG. 1

# FIG. 2

# FIG. 3

CALCULATE PHASE DIFFERENCE FOR EACH PATH — S100
$$Angle(1)=R(1,1)\times R(2,1)^*$$
$$Angle(2)=R(1,2)\times R(2,2)^*$$
$$\vdots$$
$$Angle(n)=R(1,n)\times R(2,n)^*$$

$\downarrow$

VECTOR-ADD PHASE DIFFERENCES — S110
$$Angle\_a=\sum_{k=1}^{n}Angle(k)$$

$\downarrow$

DETERMINE INTER-ANTENNA PHASE DIFFERENCE — S120

# FIG. 4

ADD RECEIVING POWER OF EACH PATH FOR EACH ANTENNA — S200

$$P_0\_1=A(1,1)^2+A(1,2)^2+\cdots+A(1,n)^2$$
$$P_0\_2=A(2,1)^2+A(2,2)^2+\cdots+A(2,n)^2$$

$\downarrow$

COMPARE $P_0\_1$ AND $P_0\_2$ — S210

# FIG. 5A

DATA SIGNAL                    DATA SYMBOL

PILOT-1 SIGNAL        ⟩ ADD→FIRST TRANSMISSION SIGNAL

FIRST PILOT SYMBOL

# FIG. 5B

DATA SIGNAL                    DATA SYMBOL

PILOT-2 SIGNAL        ⟩ ADD→SECOND TRANSMISSION SIGNAL

SECOND PILOT SYMBOL

EP 1 217 761 A2

# FIG. 6

EP 1 217 761 A2

# FIG. 7A

# FIG. 7B

EP 1 217 761 A2